(19) Europäisches Patentamt
European Patent Office
Office européen des brevets

(11) **EP 4 319 137 A1**

(12) **EUROPEAN PATENT APPLICATION**
published in accordance with Art. 153(4) EPC

(43) Date of publication:
**07.02.2024 Bulletin 2024/06**

(21) Application number: **21932162.7**

(22) Date of filing: **24.03.2021**

(51) International Patent Classification (IPC):
***H04N 5/247*** *(2006.01)*

(52) Cooperative Patent Classification (CPC):
**H04N 23/55; H04N 23/54; H04N 23/57;** B60R 11/04

(86) International application number:
**PCT/CN2021/082852**

(87) International publication number:
**WO 2022/198534 (29.09.2022 Gazette 2022/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd. Longgang Shenzhen, Guangdong 518129 (CN)**

(72) Inventors:
• **LI, Junchao**
 **Shenzhen, Guangdong 518129 (CN)**
• **CHEN, Wei**
 **Shenzhen, Guangdong 518129 (CN)**
• **LU, Zuomin**
 **Shenzhen, Guangdong 518129 (CN)**

(74) Representative: **Maiwald GmbH Engineering Elisenhof Elisenstrasse 3 80335 München (DE)**

(54) **CAMERA MODULE MOUNTING METHOD AND MOBILE PLATFORM**

(57)    A camera compact module installation method and a mobile platform are provided, and are used for autonomous driving or intelligent driving. The method includes: installing a camera compact module on a mobile platform, where the camera compact module is parallel to a ground on which the mobile platform is located. The camera compact module includes a lens group and an image sensor, and the lens group includes at least one lens. A projection of a center of the lens group on a plane of the image sensor is a first position. A distance between the first position and a center of the image sensor is greater than a first threshold, and the first threshold is greater than 0. In this way, because the camera compact module can be parallel to the ground on which the mobile platform is located, it can be ensured that a motion direction is perpendicular to the plane of the image sensor. This can improve accuracy and robustness of camera motion estimation, to reduce a target positioning error. In addition, a required detection range can be met without tilting the camera compact module for installation. The method may be applied to the internet of vehicles, for example, vehicle-to-everything V2X, long term evolution-vehicle LTE-V, or vehicle-to-vehicle V2V.

FIG. 6

**Description**

TECHNICAL FIELD

This application relates to the field of sensor technologies, and in particular, to a camera compact module installation method and a mobile platform.

BACKGROUND

A lens group and an image sensor are two important components of a camera compact module. The lens group may be a group of convex (concave) lenses, and the image sensor is an imaging plane. The image sensor converts light transmitted from the lens group into an electrical signal, and then internally converts the electrical signal into a digital signal through analog-to-digital conversion, to form an image.

Currently, the camera compact module may be used for detecting a surrounding environment and performing three-dimensional reconstruction on the surrounding environment, to implement target positioning. For example, when the camera compact module is used in a vehicle-mounted sensing system, functions of the camera compact module may mainly include detection and recognition of a target such as a vehicle around an ego vehicle, a pedestrian, a general obstacle, a lane line, a pavement marking, or a traffic sign, also include measurement of a distance and a speed of the detected target, and further include camera motion (namely, ego-vehicle motion) (including rotation and translation) estimation, and three-dimensional reconstruction on the surrounding environment based on the camera motion estimation, to implement target positioning.

When the camera compact module is installed on a mobile platform, for example, a vehicle or another motion object, accuracy and robustness of the camera motion estimation further need to be considered, to reduce a target positioning error.

SUMMARY

This application provides a camera compact module installation method and a mobile platform, to resolve a problem that a target positioning error is large due to a fact that accuracy and robustness of camera motion estimation is affected according to an installation method used to meet a required detection range.

According to a first aspect, this application provides a camera compact module installation method. The method may specifically include: installing a camera compact module on a mobile platform, where the camera compact module is parallel to a ground on which the mobile platform is located. The camera compact module includes a lens group and an image sensor, and the lens group includes at least one lens. A projection of a center of the lens group on a plane of the image sensor is a first position. A distance between the first position and a center of the image sensor is greater than a first threshold, and the first threshold is greater than 0.

According to the installation method, because the camera compact module can be parallel to the ground on which the mobile platform is located, it can be ensured that a motion direction is perpendicular to the plane of the image sensor. This can improve accuracy and robustness of camera motion estimation, to reduce a target positioning error. In addition, the distance between the center of the image sensor and the first position at which the center of the lens group is projected on the plane of the image sensor is greater than the first threshold, so that a sensing capability of an area above or below the center of the lens group can be increased, and a required detection range can be met without tilting the camera compact module for installation.

In a possible design, an optical axis of the lens group and a normal line of the plane of the image sensor are both parallel to the ground on which the mobile platform is located. This can ensure that the motion direction is perpendicular to the plane of the image sensor, to improve accuracy and robustness of camera motion estimation.

In a possible design, a connection line between the first position and the center of the image sensor is perpendicular to a horizontal axis direction in a first coordinate system. The first coordinate system is a rectangular coordinate system established by using the center of the image sensor as an origin, a horizontal rightward direction as a positive direction of a horizontal axis, and a vertical downward direction as a positive direction of a vertical axis. In this way, there is a distance between the first position and the center of the image sensor only in a vertical direction, and there is no distance in a horizontal direction. This can ensure detection performance of the camera compact module.

In a possible design, the distance between the first position and the center of the image sensor is related to a first angle, and the first angle is an angle between an angle bisector of a vertical field of view (vertical field of view, VFOV) of the camera compact module and the optical axis of the lens group. Specifically, the first angle may represent a direction of the VFOV of the camera compact module, to indicate a position of an actual detection range. A required detection range may be obtained by adjusting the first angle. In this way, the distance between the first position and the center of the image sensor may be determined based on an actual detection requirement.

In a possible design, the first angle is greater than 0 degrees and less than or equal to half of a supplementary angle of the VFOV of the camera compact module. A to-be-used degree of the first angle may be determined based on an actually required detection range, to determine the direction of the VFOV of the camera compact module. Further, the distance between the first position and the center of the image sensor is determined, to meet the actual detection requirement.

In a possible design, the first position is higher than the center of the image sensor, so that a sensing capability of an area below the center of the lens group can be increased. In other words, information that is in the area and that is originally not imaged on the image sensor may be more received by the image sensor through the lens group. Alternatively, the first position is lower than the center of the image sensor, so that a sensing capability of an area above the center of the lens group can be increased. In other words, information that is in the area and that is originally not imaged on the image sensor may be more received by the image sensor through the lens group.

In a possible design, an absolute value of a vertical coordinate $y_0$ of an optical center or a focus of expansion FOE corresponding to the camera compact module in the first coordinate system meets the following formula:

$$|y_0| = |f_y h(\theta)|$$

Herein, $f_y$ is a focal length of a center of the camera compact module, $\theta$ is the first angle, $h(\theta) = \tan(\theta)$ or $h(\theta)$ is an N-order function with one variable of $\theta$, N is an integer greater than 0, $|*|$ is an absolute value of a parameter, $\tan(*)$ indicates a tangent function, and the first coordinate system is the rectangular coordinate system established by using the center of the image sensor as the origin, the horizontal rightward direction as the positive direction of the horizontal axis, and the vertical downward direction as the positive direction of the vertical axis.

In a possible design, a vertical coordinate $y_0$ of an optical center or a focus of expansion FOE corresponding to the camera compact module in the first coordinate system meets the following formula:

$$y_0 = -f_y / \tan(\varphi/2)$$

Herein, $f_y$ is a focal length of a center of the camera compact module, $\varphi$ is the VFOV of the camera compact module, and the first coordinate system is the rectangular coordinate system established by using the center of the image sensor as the origin, the horizontal rightward direction as the positive direction of the horizontal axis, and the vertical downward direction as the positive direction of the vertical axis.

In a possible design, a vertical coordinate $y_0$ of an optical center or a focus of expansion FOE corresponding to the camera compact module in the first coordinate system meets the following formula:

$$y_0 = -f_y \theta_d$$

Herein, $f_y$ is a focal length of a center of the camera compact module, $\theta_d$ is related to $\Theta1$, $\theta_d$ may be a function $g(\theta1)$ related to $\Theta1$, $\Theta1 = (\pi - \varphi)/2$, $\varphi$ is the VFOV of the camera compact module, and the first coordinate system is the rectangular coordinate system established by using the center of the image sensor as the origin, the horizontal rightward direction as the positive direction of the horizontal axis, and the vertical downward direction as the positive direction of the vertical axis.

In a possible design, a vertical coordinate $y_0$ of an optical center or a focus of expansion FOE corresponding to the camera compact module in the first coordinate system meets the following formula:

$$y_0 = f_y \tan(\varphi/2 - \theta_0)$$

Herein, $f_y$ is a focal length of a center of the camera compact module, $\theta_0$ is a preset degree, $\varphi$ is the VFOV of the camera compact module, and the first coordinate system is the rectangular coordinate system established by using the center of the image sensor as the origin, the horizontal rightward direction as the positive direction of the horizontal axis, and the vertical downward direction as the positive direction of the vertical axis.

In a possible design, a vertical coordinate $y_0$ of an optical center or a focus of expansion FOE corresponding to the camera compact module in the first coordinate system meets the following formula:

$$y_0 = f_y \theta_s$$

Herein, $f_y$ is a focal length of a center of the camera compact module, $\theta_s$ is related to $\theta 2$, $\theta_s$ may be a function $g(\theta 2)$ related to $\Theta 2$, $\Theta 2 = \varphi/2 - \theta_0$, $\varphi$ is the VFOV of the camera compact module, $\theta_0$ is a preset degree, and the first coordinate system is the rectangular coordinate system established by using the center of the image sensor as the origin, the horizontal rightward direction as the positive direction of the horizontal axis, and the vertical downward direction as the positive direction of the vertical axis.

According to a second aspect, this application provides a mobile platform. A camera compact module parallel to a ground on which the camera compact module is located is installed on the mobile platform. The camera compact module includes a lens group and an image sensor, and the lens group includes at least one lens. A projection of a center of the lens group on a plane of the image sensor is a first position. A distance between the first position and a center of the image sensor is greater than a first threshold, and the first threshold is greater than 0.

In this way, because the camera compact module can be parallel to the ground on which the mobile platform is located, it can be ensured that a motion direction is perpendicular to the plane of the image sensor. This can improve accuracy and robustness of camera motion estimation, to reduce a target positioning error. In addition, the distance between the center of the image sensor and the first position at which the center of the lens group is projected on the plane of the image sensor is greater than the first threshold, so that a sensing capability of an area above or below the center of the lens group can be increased, and a required detection range can be met without tilting the camera compact module for installation.

In a possible design, an optical axis of the lens group and a normal line of the plane of the image sensor are both parallel to the ground on which the mobile platform is located. This can ensure that the motion direction is perpendicular to the plane of the image sensor, to improve accuracy and robustness of camera motion estimation.

In a possible design, a connection line between the center of the lens group and the center of the image sensor is perpendicular to a horizontal axis direction in a first coordinate system. The first coordinate system is a rectangular coordinate system established by using the center of the image sensor as an origin, a horizontal rightward direction as a positive direction of a horizontal axis, and a vertical downward direction as a positive direction of a vertical axis. In this way, there is a distance between the first position and the center of the image sensor only in a vertical direction, and there is no distance in a horizontal direction. This can ensure performance of the camera compact module.

In a possible design, the distance between the first position and the center of the image sensor is related to a first angle, and the first angle is an angle between an angle bisector of a vertical field of view VFOV of the camera compact module and the optical axis of the lens group. Specifically, the first angle may represent a direction of the VFOV of the camera compact module, to indicate a position of an actual detection range. A required detection range may be obtained by adjusting the first angle. In this way, the distance between the first position and the center of the image sensor may be determined based on an actual detection requirement.

In a possible design, the first angle is greater than 0 degrees and less than or equal to half of a supplementary angle of the VFOV of the camera compact module. A to-be-used degree of the first angle may be determined based on an actually required detection range, to determine the direction of the VFOV of the camera compact module. Further, the distance between the first position and the center of the image sensor is determined, to meet the actual detection requirement.

In a possible design, the first position is higher than the center of the image sensor, so that a sensing capability of an area below the center of the lens group can be increased. In other words, information that is in the area and that is originally not imaged on the image sensor may be more received by the image sensor through the lens group. Alternatively, the first position is lower than the center of the image sensor, so that a sensing capability of an area above the center of the lens group can be increased. In other words, information that is in the area and that is originally not imaged on the image sensor may be more received by the image sensor through the lens group.

In a possible design, an absolute value of a vertical coordinate $y_0$ of an optical center or a focus of expansion FOE corresponding to the camera compact module in the first coordinate system meets the following formula:

$$|y_0| = \left| f_y h(\theta) \right|$$

Herein, $f_y$ is a focal length of a center of the camera compact module, $\theta$ is the first angle, $h(\theta) = \tan(\theta)$ or $h(\theta)$ is an N-order function with one variable of $\theta$, N is an integer greater than 0, and the first coordinate system is the rectangular coordinate system established by using the center of the image sensor as the origin, the horizontal rightward direction as the positive direction of the horizontal axis, and the vertical downward direction as the positive direction of the vertical axis.

In a possible design, a vertical coordinate $y_0$ of an optical center or a focus of expansion FOE corresponding to the camera compact module in the first coordinate system meets the following formula:

$$y_0 = -f_y/\tan(\varphi/2)$$

Herein, $f_y$ is a focal length of a center of the camera compact module, $\varphi$ is the VFOV of the camera compact module, and the first coordinate system is the rectangular coordinate system established by using the center of the image sensor as the origin, the horizontal rightward direction as the positive direction of the horizontal axis, and the vertical downward direction as the positive direction of the vertical axis.

In a possible design, a vertical coordinate $y_0$ of an optical center or a focus of expansion FOE corresponding to the camera compact module in the first coordinate system meets the following formula:

$$y_0 = -f_y\theta_d$$

Herein, $f_y$ is a focal length of a center of the camera compact module, $\theta_d$ is related to $\Theta1$. For example, $\theta_d$ may be a function $g(\theta1)$ related to $\Theta1$, $\Theta1 = (\pi - \varphi)/2$, and $\varphi$ is the VFOV of the camera compact module. The first coordinate system is the rectangular coordinate system established by using the center of the image sensor as the origin, the horizontal rightward direction as the positive direction of the horizontal axis, and the vertical downward direction as the positive direction of the vertical axis.

In a possible design, a vertical coordinate $y_0$ of an optical center or a focus of expansion FOE corresponding to the camera compact module in the first coordinate system meets the following formula:

$$y_0 = f_y\tan(\varphi/2 - \theta_0)$$

Herein, $f_y$ is a focal length of a center of the camera compact module, $\theta_0$ is a preset degree, $\varphi$ is the VFOV of the camera compact module, and the first coordinate system is the rectangular coordinate system established by using the center of the image sensor as the origin, the horizontal rightward direction as the positive direction of the horizontal axis, and the vertical downward direction as the positive direction of the vertical axis.

In a possible design, a vertical coordinate $y_0$ of an optical center or a focus of expansion FOE corresponding to the camera compact module in the first coordinate system meets the following formula:

$$y_0 = f_y\theta_s$$

Herein, $f_y$ is a focal length of a center of the camera compact module, $\theta_s$ is related to $\Theta2$, $\theta_s$ may be a function $g(\theta2)$ related to $\Theta2$, $\Theta2 = \varphi/2 - \theta_0$, $\varphi$ is the VFOV of the camera compact module, $\theta_0$ is a preset degree, and the first coordinate system is the rectangular coordinate system established by using the center of the image sensor as the origin, the horizontal rightward direction as the positive direction of the horizontal axis, and the vertical downward direction as the positive direction of the vertical axis.

BRIEF DESCRIPTION OF DRAWINGS

FIG. 1 is a schematic diagram of an exploded view of a camera compact module according to this application;
FIG. 2 is a schematic diagram of assembly positions of a lens group and an image sensor in the conventional technology;
FIG. 3 is a schematic diagram of a VFOV and a horizontal field of view that can be sensed by a camera compact module in the conventional technology;
FIG. 4 is a schematic diagram of installation of a front-view camera in a vehicle-mounted surround-view sensing system in the conventional technology;
FIG. 5 is a schematic diagram of installation of a front-view camera in a vehicle-mounted front-view sensing system in the conventional technology;
FIG. 6 is a schematic diagram of installation of a camera compact module according to this application;
FIG. 7 is a side view of a camera compact module according to this application;
FIG. 8 is a projection diagram of a camera compact module according to this application;
FIG. 9 is a projection diagram of another camera compact module according to this application;
FIG. 10 is a schematic diagram of installation of another camera compact module according to this application;

FIG. 11 is a schematic diagram of installation of another camera compact module according to this application;

FIG. 12 is a schematic diagram of estimating camera motion by using matched feature points in two frames of images captured by a camera compact module according to this application;

FIG. 13 is a schematic diagram of a solution result according to this application; and

FIG. 14 is a schematic diagram of impact of a translation direction of a camera compact module on translation vector estimation according to this application.

**DESCRIPTION OF EMBODIMENTS**

The following describes in detail embodiments of this application with reference to accompanying drawings.

Embodiments of this application provide a camera compact module installation method and a mobile platform, to resolve a problem that a target positioning error is large due to a fact that accuracy and robustness of camera motion estimation is affected according to an installation method used to meet a required detection range.

In this application, "at least one" means one or more, and "a plurality of" means two or more.

In descriptions of this application, terms such as "first" and "second" are merely used for a purpose of distinguishing for description, and cannot be construed as indicating or implying relative importance or construed as indicating or implying a sequence.

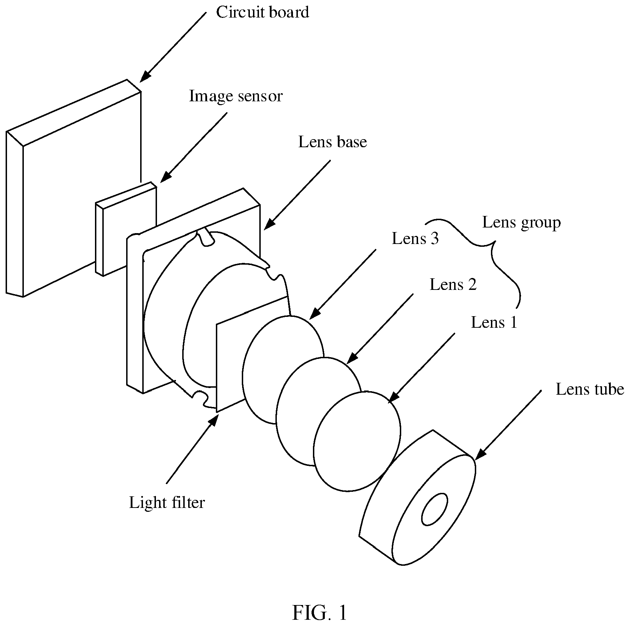

Currently, main components of a camera compact module (camera compact module, CCM) may be shown in an exploded view of the camera compact module in FIG. 1. In FIG. 1, the camera compact module may mainly include a lens group and an image sensor. The lens group may include at least one lens (lens). For example, the lens group in FIG. 1 may include a lens 1, a lens 2, and a lens 3. The at least one lens included in the lens group may be a convex (concave) lens. Specifically, as shown in FIG. 1, the lens group may be fastened by using a lens tube and a lens base, and a light filter is disposed between the lens group and the lens base. The image sensor may be a semiconductor chip, and the semiconductor chip includes a chip photosensitive area. Specifically, the image sensor may convert light transmitted from the lens group into an electrical signal, and then internally converts the electrical signal into a digital signal through analog-to-digital conversion, to form an image.

For example, as shown in FIG. 1, the camera compact module may further include a circuit board. The circuit board is a support body of electronic components, and is a carrier for electrical interconnection between the electronic components.

It should be noted that a quantity of lenses included in the lens group shown in FIG. 1 is merely an example. In practice, the lens group may include more or fewer lenses. This is not limited in this application.

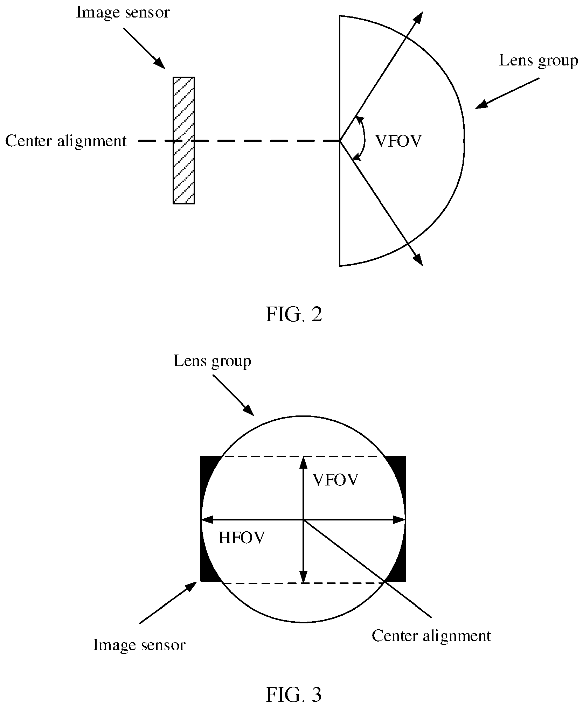

Currently, in an assembly process of the camera compact module, generally, it is ensured that a center of the lens group is aligned with a center of the image sensor. For example, it can be learned from a schematic diagram of assembly positions of the lens group and the image sensor shown in FIG. 2 and a schematic diagram of a projection of the camera compact module shown in FIG. 3 that a projection of the center of the lens group on a plane of the image sensor coincides with the center of the image sensor (namely, center alignment). In this assembly manner, a vertical field of view (vertical field of view, VFOV) that can be actually sensed by the camera compact module is usually small due to a limitation of an aspect ratio of the image sensor. For example, a VFOV and a horizontal field of view (horizontal field of view, HFOV) that can be sensed by the camera compact module may be shown in FIG. 3. The VFOV is a field angle between the lens group and a height, and the HFOV is a field angle between the lens group and a width. Only the height and the width are shown in FIG. 3.

The camera compact module may be widely applied to various scenarios that require pose estimation and three-dimensional reconstruction of a target object, so that the camera compact module can be used for detecting a surrounding environment and performing three-dimensional reconstruction on the surrounding environment, to implement target positioning. For example, the camera compact module may be used in a mobile platform or the like, to detect the mobile platform or the surrounding environment. For example, the camera compact module may be used in a vehicle, and may be specifically used in a vehicle-mounted sensing system. For example, the camera compact module may be used in a front-view camera in a vehicle-mounted front-view sensing system, or may be used in a front-view camera, a side-view camera, or a rear-view camera in a vehicle-mounted surround-view sensing system. A field of view (field of view, FOV) of the front-view camera, the side-view camera, or the rear-view camera may be 40 degrees to 60 degrees of a general specification, or may be 23 degrees to 40 degrees of a narrower specification, or may be 100 degrees to 180 degrees of a wider specification, or the like. For example, the front-view camera, the side-view camera, or the rear-view camera may be specifically a type of camera like a monocular camera, a binocular camera, or a fisheye camera.

For example, when the camera compact module is used in the vehicle-mounted sensing system, functions of the camera compact module may mainly include detection and recognition of a target such as a vehicle around an ego vehicle, a pedestrian, a general obstacle, a lane line, a pavement marking, or a traffic sign, also include measurement of a distance and a speed of the detected target, and further include camera motion (including rotation and translation) estimation, and three-dimensional reconstruction of the surrounding environment based on the camera motion estimation, to implement target positioning.

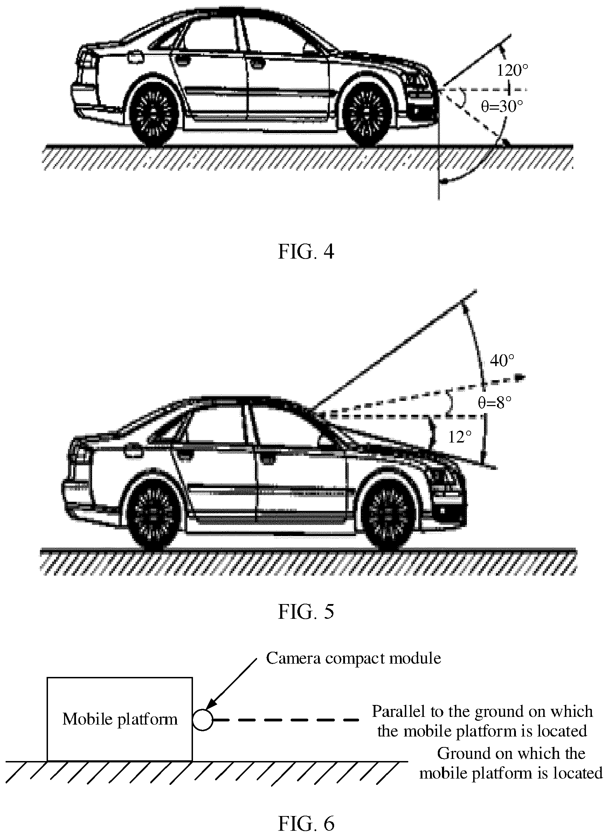

In a specific example, when the camera compact module is used in the vehicle-mounted surround-view sensing system, an environment around a vehicle body is detected based on the camera compact module. To ensure that a blind area around the vehicle body is small enough, the camera compact module is tilted downward to point to a ground during installation, to ensure that a lower edge of the VFOV of the camera compact module is close to an edge of the vehicle body of the ego vehicle. For example, FIG. 4 is a schematic diagram of installation of the front-view camera in the vehicle-mounted surround-view sensing system. It is assumed that a VFOV of the front-view camera is 120 degrees. To meet a detection range, the camera compact module may be tilted downward by 30 degrees (in other words, an optical axis of the camera compact module is tilted downward by 30 degrees), to ensure that the lower edge of the VFOV of the camera compact module is close to a front bumper of the ego vehicle.

It should be noted that installation principles of the side-view camera and the rear-view camera in the vehicle-mounted surround-view sensing system are the same as the installation principle of the front-view camera, which may be mutually referenced. Details are not described herein again.

In another specific example, when the camera compact module is used in the vehicle-mounted front-view sensing system, targets such as a traffic sign and a traffic light are detected based on the camera compact module. For example, FIG. 5 is a schematic diagram of installation of the front-view camera in the vehicle-mounted front-view sensing system. It is assumed that a VFOV of the front-view camera is 40 degrees. Due to a limitation of a hood of the ego vehicle, a field of view of a horizontal downward part of the front-view camera is about 12 degrees. To meet a detection range, the camera compact module may be tilted upward by 8 degrees during installation (in other words, an optical axis of the camera compact module is tilted upward by 8 degrees).

In the two examples shown in FIG. 4 and FIG. 5, to meet the detection range, the camera compact module is installed in a tilt manner. In this way, a motion direction and the plane of the image sensor are not in a vertical relationship, affecting accuracy and robustness of camera motion estimation and causing a large target positioning error. Based on this, this application proposes a camera compact module installation method and a mobile platform, to improve accuracy and robustness of camera motion estimation and further reduce a target positioning error.

To describe the technical solutions in embodiments of this application more clearly, the following describes in detail the camera compact module installation method and the mobile platform provided in embodiments of this application with reference to the accompanying drawings.

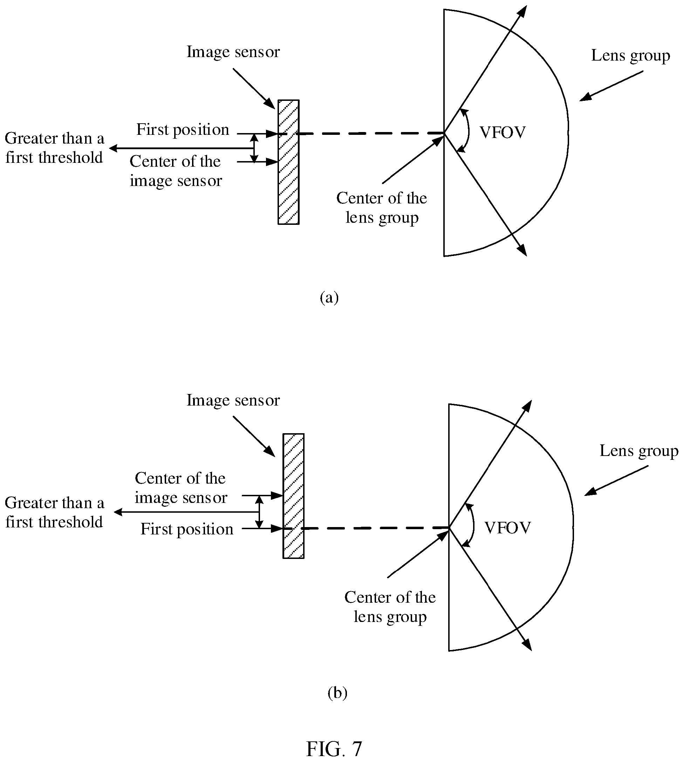

An embodiment of this application provides a camera compact module installation method. The method may specifically include: installing a camera compact module on a mobile platform, where the camera compact module is parallel to a ground on which the mobile platform is located. For example, a schematic diagram of installation of the camera compact module may be shown in FIG. 6. It should be noted that a shape of the camera compact module and an installation position of the camera compact module on the mobile platform in FIG. 6 are merely examples. This is not limited in this application. The camera compact module may include a lens group and an image sensor, and the lens group includes at least one lens. A projection of a center of the lens group on a plane of the image sensor is a first position. A distance between the first position and a center of the image sensor is greater than a first threshold, and the first threshold is greater than 0. For example, a side view of the camera compact module may be shown in (a) in FIG. 7 or (b) in FIG. 7.

In an embodiment, if an assembly error is not considered, a center of a lens group in an existing camera compact module is absolutely aligned with a center of an image sensor. In this case, a projection of the center of the lens group on a plane of the image sensor coincides with the center of the image sensor. In other words, a distance between a projection position and the center of the image sensor is 0. That is, if an assembly error is not considered, the first threshold in the camera compact module in this application is greater than 0.

In another embodiment, if an assembly error is considered, an error value also exists when a center of a lens group in an existing camera compact module is aligned with a center of an image sensor. In this case, if a distance between the center of the image sensor and a projection position of the center of the lens group on a plane of the image sensor is equal to the error value, it is considered that the center of the lens group is aligned with the center of the image sensor. That is, if an assembly error is considered, the first threshold in the camera compact module in this application is greater than the error value.

Specifically, when a camera is installed on the mobile platform, and the camera compact module is parallel to the ground on which the mobile platform is located, an optical axis of the lens group and a normal line of the plane of the image sensor are both parallel to the ground on which the mobile platform is located. In this way, accuracy and robustness of camera motion estimation can be improved, to reduce a target positioning error and improve accuracy of target positioning. For example, the mobile platform may be a motor vehicle, an unmanned aerial vehicle, a railcar, a bicycle, a signal light, a speed measurement apparatus, or a network device (for example, a base station or a terminal device in various systems). For example, the camera compact module may be installed on a movable device, for example, a transportation device, a home device, a robot, or a pan-tilt-zoom. A type of a terminal device on which the camera compact module is installed and a function of the camera compact module are not limited in this application.

For example, a connection line between the first position and the center of the image sensor may be perpendicular to a horizontal axis direction in a first coordinate system. The first coordinate system is a rectangular coordinate system established by using the center of the image sensor as an origin, a horizontal rightward direction as a positive direction of a horizontal axis, and a vertical downward direction as a positive direction of a vertical axis. To be specific, there is a distance between the center of the image sensor and the projection position of the center of the lens group on the plane of the image sensor in a vertical direction, and there is no distance in a horizontal direction.

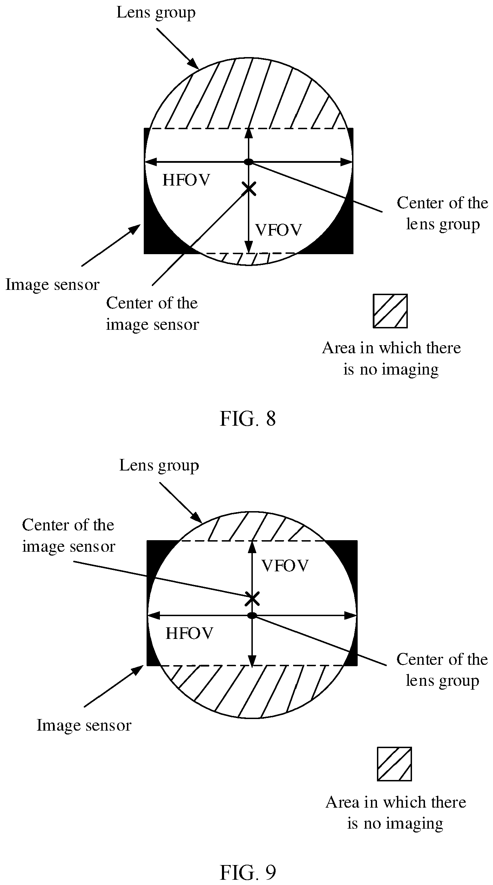

In an optional implementation, as shown in (a) in FIG. 7, the first position may be higher than the center of the image sensor. In this case, a projection diagram of the camera compact module may be shown in FIG. 8. It can be learned from FIG. 8 that the projection position (namely, the first position) of the lens group on the plane of the image sensor is higher than the center of the image sensor.

Specifically, compared with the camera compact module shown in FIG. 3, the camera compact module shown in FIG. 8 may be used to increase a sensing capability of an area below the center of the lens group. In other words, information that is in the area and that is originally not imaged on the image sensor may be more received by the image sensor through the lens group.

In another optional implementation, as shown in (b) in FIG. 7, the first position may be lower than the center of the image sensor. In this case, a projection diagram of the camera compact module may be shown in FIG. 9. It can be learned from FIG. 9 that the projection position (namely, the first position) of the lens group on the plane of the image sensor is lower than the center of the image sensor.

Specifically, compared with the camera compact module shown in FIG. 3, the camera compact module shown in FIG. 9 may be used to increase a sensing capability of an area above the center of the lens group. In other words, information that is in the area and that is originally not imaged on the image sensor may be more received by the image sensor through the lens group.

In an implementation, the distance between the first position and the center of the image sensor may be related to a first angle, and the first angle may be an angle between an angle bisector of a VFOV of the camera compact module and the optical axis of the lens group. Optionally, the first angle may be greater than 0 degrees and less than or equal to half of a supplementary angle of the VFOV of the camera compact module.

The distance between the first position and the center of the image sensor is an absolute value of a vertical coordinate of an optical center or a focus of expansion (focus of expansion, FOE) corresponding to the camera compact module in the first coordinate system.

Specifically, the absolute value of the vertical coordinate $y_0$ of the optical center or the FOE corresponding to the camera compact module in the first coordinate system may meet the following formula 1:

$$|y_0| = |f_y h(\theta)| \qquad\qquad \text{Formula 1}$$

Herein, $f_y$ is a focal length of a center of the camera compact module, $\theta$ is the first angle, $h(\theta) = \tan(\theta)$ or $h(\theta)$ is an N-order function with one variable of $\theta$, and N is an integer greater than 0. 1*1 is an absolute value of a parameter, and tan (*) indicates a tangent function.

Optionally, the FOE may be a convergence point of an optical flow on a static target when the camera compact module moves based on the mobile platform.

In the foregoing method, the first angle may be a to-be-adjusted angle. To be specific, a detection range of the camera compact module is a corresponding detection range obtained by adjusting the first angle based on a condition that the VFOV is not damaged.

In an optional implementation, during actual imaging, coordinates that are of the optical center and that are calibrated through camera intrinsic parameter calibration of the camera compact module shown in (a) in FIG. 7 and FIG. 8 are located in an upper half part of the plane of the image sensor, and coordinates of the FOE are also located in the upper half part of the plane of the image sensor. In this case, $y_0$ is a negative value in the first coordinate system. In this way, $y_0$ may be obtained based on the formula 1, and may meet the following formula 2:

$$y_0 = -f_y h(\theta) \qquad\qquad \text{Formula 2}$$

In another optional implementation, during actual imaging, coordinates that are of the optical center and that are calibrated through camera intrinsic parameter calibration of the camera compact module shown in (b) in FIG. 7 and FIG. 9 are located in a lower half part of the plane of the image sensor, and coordinates of the FOE are also located in the lower half part of the plane of the image sensor. In this case, $y_0$ is a positive value in the first coordinate system. In this way, $y_0$ may be obtained based on the formula 1, and may meet the following formula 3:

$$y_0 = f_y h(\theta) \hspace{4cm} \text{Formula 3}$$

Optionally, because imaging models of camera compact modules are different, functions $h(\theta)$ of $\theta$ may also be different. For example, when an imaging model of the camera compact module is a pinhole imaging model, $h(\theta) = \tan(\theta)$. For another example, when an imaging model of the camera compact module is a fisheye imaging model, $h(\theta)$ may be an N-order function with one variable of $\theta$. Optionally, the N-order function with one variable of $\theta$ may be a nine-order function with one variable of $\theta$. For example, $h(\theta) = \theta(1+k_1\theta^2+k_2\theta^4+k_3\theta^6+k_4\theta^8)$. Herein, $k_1$, $k_2$, $k_3$, and $k_4$ are four coefficients in the fisheye imaging model. For example, values of $k_1$, $k_2$, $k_3$, and $k_4$ may be - 1.2101823606265119, 2.348159905176264, -2.8413822488946474, and 1.3818466241138192 respectively. For another example, values of $k_1$, $k_2$, $k_3$, and $k_4$ may be -1.1529851704803267, 2.114443595798193, -2.458009210238794, and 1.1606670303240054 respectively. For another example, values of $k_1$, $k_2$, $k_3$, and $k_4$ may be -1.1741024894366126, 2.1870282871688733, -2.5272904743180695, and 1.170976436497773 respectively. Certainly, the values of $k_1$, $k_2$, $k_3$, and $k_4$ may alternatively be other values. Examples are not listed one by one herein in this application.

It should be noted that the nine-order function with one variable of $\theta$ is merely an example, and is not used as a limitation on $h(\theta)$.

It should be noted that the foregoing descriptions show possible $h(\theta)$ by using only two imaging models as examples, and do not constitute a limitation on $h(\theta)$. $h(\theta)$ may be indicated by using a plurality of other functions. Examples are not listed one by one herein in this application.

In an optional implementation, the distance between the first position and the center of the image sensor may be related to the VFOV of the camera compact module. Similarly, the distance between the first position and the center of the image sensor is an absolute value of a vertical coordinate of an optical center or an FOE corresponding to the camera compact module in the first coordinate system.

In an example, the vertical coordinate $y_0$ of the optical center or the FOE corresponding to the camera compact module in the first coordinate system may meet the following formula 4:

$$y_0 = -f_y / \tan(\varphi/2) \hspace{4cm} \text{Formula 4}$$

Herein, $f_y$ is a focal length of a center of the camera compact module, and $\varphi$ is the VFOV of the camera compact module.

Optionally, when an imaging model of the camera compact module is a pinhole imaging model, the method in the formula 4 may be used.

In another example, the vertical coordinate $y_0$ of the optical center or the FOE corresponding to the camera compact module in the first coordinate system may meet the following formula 5:

$$y_0 = -f_y \theta_d \hspace{4cm} \text{Formula 5}$$

Herein, $f_y$ is a focal length of a center of the camera compact module, and $\theta_d$ is related to $\Theta1$. For example, $\theta_d$ may be a function $g(\theta1)$ related to $\Theta1$, $\Theta1 = (\pi - \varphi)/2$, and $\varphi$ is the VFOV of the camera compact module.

Optionally, when an imaging model of the camera compact module is a fisheye imaging model, the method in the formula 5 may be used. In this case, $\theta_d = \theta1(1+k_1\theta1^2+k_2\theta1^4+k_3\theta1^6+k_4\theta1^8)$, where $k_1$, $k_2$, $k_3$, and $k_4$ are four coefficients in the fisheye imaging model. For example, values of $k_1$, $k_2$, $k_3$, and $k_4$ may be - 1.2101823606265119, 2.348159905176264, -2.8413822488946474, and 1.3818466241138192 respectively. For another example, values of $k_1$, $k_2$, $k_3$, and $k_4$ may be -1.1529851704803267, 2.114443595798193, -2.458009210238794, and 1.1606670303240054 respectively. For another example, values of $k_1$, $k_2$, $k_3$, and $k_4$ may be -1.1741024894366126, 2.1870282871688733, -2.5272904743180695, and 1.170976436497773 respectively. Certainly, the values of $k_1$, $k_2$, $k_3$, and $k_4$ may alternatively be other values. Examples are not listed one by one herein in this application.

It should be noted that the manner of calculating $\theta_d$ is merely an example. There may be a plurality of other manners. This is not limited in this application.

During specific implementation, when the camera compact module is the camera compact module shown in (a) in FIG. 7 and FIG. 8, the method in the formula 4 or the formula 5 may be used.

In another example, the vertical coordinate $y_0$ of the optical center or the FOE corresponding to the camera compact module in the first coordinate system may meet the following formula 6:

$$y_0 = f_y \tan(\varphi/2 - \theta_0) \hspace{4cm} \text{Formula 6}$$

Herein, $f_y$ is a focal length of a center of the camera compact module, $\theta_0$ is a preset degree, and $\varphi$ is the VFOV of the camera compact module.

Optionally, $\theta_0$ may be 0.21 radian (rad) or the like, or $\theta_0$ may be 12 degrees or the like. Certainly, $\theta_0$ may alternatively be another degree. This is not limited in this application.

Optionally, when an imaging model of the camera compact module is a pinhole imaging model, the method in the formula 6 may be used.

In another example, the vertical coordinate $y_0$ of the optical center or the FOE corresponding to the camera compact module in the first coordinate system may meet the following formula 7:

$$y_0 = f_y \theta_s \qquad\qquad \text{Formula 7}$$

Herein, $f_y$ is a focal length of a center of the camera compact module, and $\theta_s$ is related to $\Theta 2$. For example, $\theta_s$ may be a function $g(\theta 2)$ related to $\theta 2$, $\theta 2 = c\varphi/2 - \theta_0$, and $\varphi$ is the VFOV of the camera compact module.

Optionally, when an imaging model of the camera compact module is a fisheye imaging model, the method in the formula 7 may be used. In this case, $\theta_s = \theta 2(1 + k_1\theta 2^2 + k_2\theta 2^4 + k_3\theta 12^6 + k_4\theta 2^8)$, where $k_1$, $k_2$, $k_3$, and $k_4$ are four coefficients in the fisheye imaging model. For example, values of $k_1$, $k_2$, $k_3$, and $k_4$ may be - 1.2101823606265119, 2.348159905176264, -2.8413822488946474, and 1.3818466241138192 respectively. For another example, values of $k_1$, $k_2$, $k_3$, and $k_4$ may be -1.1529851704803267, 2.114443595798193, -2.458009210238794, and 1.1606670303240054 respectively. For another example, values of $k_1$, $k_2$, $k_3$, and $k_4$ may be -1.1741024894366126, 2.1870282871688733, -2.5272904743180695, and 1.170976436497773 respectively. Certainly, the values of $k_1$, $k_2$, $k_3$, and $k_4$ may alternatively be other values. Examples are not listed one by one herein in this application.

It should be noted that the manner of calculating $\theta_s$ is merely an example. There may be a plurality of other manners. This is not limited in this application.

During specific implementation, when the camera compact module is the camera compact module shown in (b) in FIG. 7 and FIG. 9, the method in the formula 6 or the formula 7 may be used.

For example, the mobile platform may be a vehicle or the like.

For example, when the camera compact module is installed on the vehicle, the camera compact module shown in (a) in FIG. 7 and FIG. 8 may be used in a vehicle-mounted surround-view sensing system, and the camera compact module shown in (b) in FIG. 7 and FIG. 9 may be used in a vehicle-mounted front-view sensing system. In an implementation, according to the camera compact module installation method provided in this embodiment of this application, when the camera compact module is installed on the vehicle, a detection requirement can be met without tilting the camera compact module during installation.

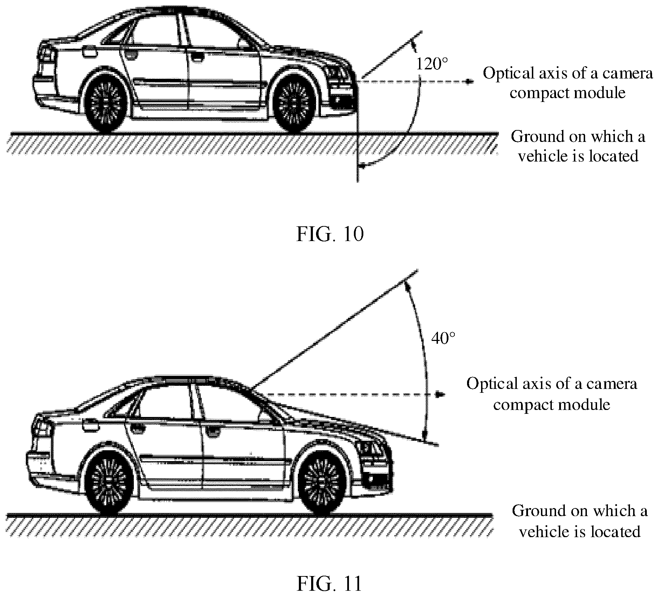

In an optional implementation, when the mobile platform is the vehicle, and the camera compact module installed on the vehicle is used in the vehicle-mounted surround-view sensing system, the camera compact module does not need to be tilted downward to point to the ground during installation, so that it can be ensured that a blind area around a vehicle body is small enough. For example, when the camera compact module is used in a front-view camera of the vehicle-mounted surround-view sensing system, assuming that a VFOV of the camera compact module is 120 degrees, a schematic diagram of installation of the camera compact module may be shown in FIG. 10. It can be learned from FIG. 10 that the optical axis of the camera compact module is parallel to the ground on which the vehicle is located. In this way, it can be ensured that a motion direction is perpendicular to the plane of the image sensor, to improve accuracy and robustness of camera motion estimation and further reduce a target positioning error.

In another optional implementation, when the mobile platform is the vehicle, and the camera compact module installed on the vehicle is used in the vehicle-mounted front-view sensing system, the camera compact module does not need to be tilted upward during installation, so that a sensing range of a target like a traffic sign or a traffic light can be increased. For example, when the camera compact module is used in the vehicle-mounted front-view sensing system, assuming that a VFOV of the camera compact module is 40 degrees, a schematic diagram of installation of the camera compact module may be shown in FIG. 11. It can be learned from FIG. 11 that the optical axis of the camera compact module is parallel to the ground on which the vehicle is located. In this way, it can be ensured that a motion direction is perpendicular to the plane of the image sensor, to improve accuracy and robustness of camera motion estimation and further reduce a target positioning error.

According to the camera compact module installation method provided in this embodiment of this application, because the camera compact module can be parallel to the ground on which the mobile platform is located, it can be ensured that the motion direction is perpendicular to the plane of the image sensor. This can improve accuracy and robustness of camera motion estimation, to reduce a target positioning error. In addition, a required detection range can be met without tilting the camera compact module for installation.

Based on the foregoing descriptions, an embodiment of this application further provides a mobile platform, including a camera compact module. The camera compact module includes a lens group and an image sensor, and the lens group includes at least one lens. The camera compact module is parallel to a ground on which the mobile platform is located. A projection of a center of the lens group on a plane of the image sensor is a first position. A distance between the first position and the center of the image sensor is greater than a first threshold, and the first threshold is greater than 0. Specifically, for detailed descriptions of the camera compact module, refer to related descriptions in the foregoing embodiment. Details are not described herein again. In an optional implementation, the mobile platform may be but is not limited to a vehicle.

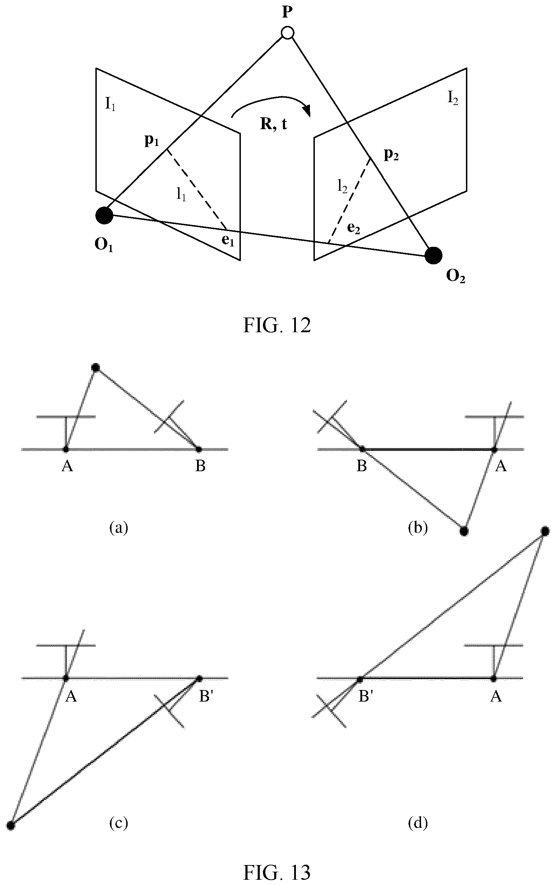

Based on the foregoing embodiment, the camera compact module installation method provided in embodiments of this application is used, and the camera compact module is installed on the mobile platform. In this case, when target positioning is performed, camera motion estimation performed by using matched feature points in two frames of images captured by the camera compact module is an important step in a spatial three-dimensional reconstruction algorithm. FIG. 12 is used as an example. It is assumed that motion between two frames of images $I_1$ and $I_2$ is calculated. In other words, rotation **R** and translation **t** of a camera from a first frame of image $I_1$ to a second frame of image $I_2$ are calculated. Centers of the lens groups corresponding to the two frames of images are $O_1$ and $O_2$ respectively. It is considered that a feature point $p_1$ in $I_1$ corresponds to a feature point $p_2$ in $I_2$. The feature points in the two frames of images match or correspond to each other, and it indicates that the feature points in the two frames of images are projections of a same spatial three-dimensional point **P** on the two frames of images.

A geometric relationship is analyzed from an algebraic perspective. In a coordinate system of the first frame of image, it is assumed that a spatial position of **P** is $P = [X, Y, Z]^T$.

It is assumed that an imaging model of the camera compact module is a pinhole imaging model. According to the pinhole imaging model, pixel positions of pixels $p_1$ and $p_2$ of the point **P** in the two frames of images $I_1$ and $I_2$ may meet the following formula 8:

$$s_1 p_1 = KP, \quad s_2 p_2 = K(RP + t) \qquad \text{Formula 8}$$

Herein, K is a camera intrinsic parameter matrix.

In a homogeneous coordinate system, a vector is equal to the vector multiplied by any non-zero constant, and this usually indicates a projection relationship. For example, $p_1$ and $s_1 p_1$ form a projection relationship. $p_1$ and $s_1 p_1$ are equivalent in a sense of the homogeneous coordinate system, or equivalent in a sense of a scale, and may be denoted as: $s_1 p_1 \sim p_1$.

In this case, the two projections in the formula 8 may be denoted as: $p_1 \sim KP$, and $p_2 \sim K(RP + t)$.

It is denoted that $x_1 = K^{-1} p_1$, and $x_2 = K^{-1} p_2$. $x_1 = K^{-1} p_1$, and $x_2 = K^{-1} p_2$ are substituted into the foregoing formula to obtain the following: $x_2 \sim Rx_1 + t$.

Both sides are simultaneously left multiplied by $t^\wedge$, and then simultaneously left multiplied by $x_2^{\mathrm{T}}$. In this case,

$x_2^{\mathrm{T}} t^\wedge x_2 \sim x_2^{\mathrm{T}} t^\wedge R x_1$ is obtained. Herein, $t = [t_1, t_2, t_3]^\mathrm{T}$, and

$$t^\wedge = \begin{bmatrix} 0 & -t_3 & t_2 \\ t_3 & 0 & -t_1 \\ -t_2 & t_1 & 0 \end{bmatrix}.$$

Because the vector $t^\wedge x_2$ is perpendicular to the vector $x_2$ on a left side of the equal sign, an inner product of the two vectors is 0. In this case, the following formula 9 is obtained:

$$x_2^{\mathrm{T}} t^\wedge R x_1 = 0 \qquad \text{Formula 9}$$

The formula 9 may be referred to as an epipolar constraint. An essential matrix $\mathbf{E} = t^\wedge R$ is defined as a $3 \times 3$ matrix.

It is assumed that normalized coordinates of a pair of matching points are $x_1 = [u_1, v_1, 1]^\mathrm{T}$ and $x_2 = [u_2, v_2, 1]^\mathrm{T}$. According to the epipolar constraint,

$$\begin{bmatrix} u_2 & v_2 & 1 \end{bmatrix} \begin{bmatrix} e_1 & e_2 & e_3 \\ e_4 & e_5 & e_6 \\ e_7 & e_8 & e_9 \end{bmatrix} \begin{bmatrix} u_1 \\ v_1 \\ 1 \end{bmatrix} = 0.$$

If the matrix **E** is expanded into a vector form, $e = [e_1,e_2,e_3,e_4,e_5,e_6,e_7,e_8,e_9]^T$ is obtained.

In this case, the epipolar constraint may be written in the following linear form: $[u_2u_1,u_2v_1,u_2,v_2u_1,v_2v_1,v_2,u_1,v_1,1]$ $\cdot e = 0$.

Generally, n ≥ 8 pairs of feature points may be used for estimating **E**. All points are put into an equation, to obtain a system of linear equations shown in a formula 10:

$$Ae = 0 \qquad\qquad\qquad \text{Formula 10}$$

$$A = \begin{bmatrix} u_2^1 u_1^1 & u_2^1 v_1^1 & u_2^1 & v_2^1 u_1^1 & v_2^1 v_1^1 & v_2^1 & u_1^1 & v_1^1 & 1 \\ u_2^2 u_1^2 & u_2^2 v_1^2 & u_2^2 & v_2^2 u_1^2 & v_2^2 v_1^2 & v_2^2 & u_1^2 & v_1^2 & 1 \\ \vdots & \vdots & \vdots & \vdots & \vdots & \vdots & \vdots & \vdots & \vdots \\ u_2^n u_1^n & u_2^n v_1^n & u_2^n & v_2^n u_1^n & v_2^n v_1^n & v_2^n & u_1^n & v_1^n & 1 \end{bmatrix}$$

Herein, .

It is easy to prove that a solution of the system of linear equations shown in the formula 10 is an eigenvector corresponding to a minimum eigenvalue of a matrix $A^TA$.

After **E** is obtained through solving, the rotation **R** and the translation **t** of the camera may be recovered through singular value decomposition (singular value decomposition, SVD). It is assumed that SVD of **E** is $E = U\Sigma V^T$. Herein, **U** and **V** are orthogonal matrices, and $\Sigma$ is a singular value matrix. For any **E,** two possible **R** and **t** may correspond to **E** as follows:

$$t_1^\wedge = UR_z(\pi/2)\Sigma U^T, \qquad R_1 = UR_z^T(\pi/2)V^T$$

$$t_2^\wedge = UR_z(-\pi/2)\Sigma U^T, \qquad R_2 = UR_z^T(-\pi/2)V^T$$

Herein, $R_z(\pi/2)$ indicates a rotation matrix obtained by rotating 90 degrees along a Z axis. In this case, there are four possible solutions in total when E is decomposed into R and t, which may be shown in FIG. 13.

It can be learned from FIG. 13 that **P** only in a first solution (as shown in (a) in FIG. 13) has a positive depth in two cameras. Therefore, provided that any point is substituted into the four solutions and depths of the point in the two cameras are detected, a correct solution may be determined.

It is denoted that $B = A^TA$. An orthogonal matrix **H** is diagonalized, that is, $H^{-1}BH = \text{diag}\{\lambda_1,\lambda_2, ... , \lambda_n\}$. Herein, $\lambda_i$ is an eigenvalue of the matrix **B** , and i = 1,2, ..., n.

Without loss of generality, it is assumed that $\lambda_1$ is a simple eigenvalue. Then, it is denoted that $\lambda_1 < \lambda_2 \le \lambda_3 \le \cdots \le \lambda_n$, and a corresponding eigenvector span is denoted as $H = [h_1,h_2,... , h_n]$. Herein, **e** is an eigenvector corresponding to the eigenvalue $\lambda_1$. In other words, e is in a span of $h_1$.

It is assumed that $B(\varepsilon) = B + \Delta_B$, indicating that noise is superimposed on **B**. Herein, $\varepsilon$ is a maximum value of the matrix $\Delta_B = [\delta_{bij}]$. In this case, $\Delta_B = \varepsilon\tilde{B}$. Herein, $\tilde{B} = [b_{ij}]$, and $b_{ij} = \delta_{bij}/\varepsilon$.

Therefore, $|b_{ij}| \le 1$. A minimum eigenvalue of the matrix $\Delta_B$ is denoted as $\lambda_1(\varepsilon)$, and a corresponding eigenvector is $e(\varepsilon) = e + \delta_e$. $\delta_e$ is in a span of $\{h_2,h_3,... , h_n\}$.

When $\varepsilon$ is small enough, an error $\lambda_1(\varepsilon) - \lambda_1$ may be expanded into a series $\lambda_1(\varepsilon) - \lambda_1 = a_1\varepsilon + a_2\varepsilon^2 + a_3\varepsilon^3 + \cdots$, where a linear part may be represented as $a_1\epsilon = h_1^T\Delta_B h_1$.

It is denoted that $H_2 = [h_2,h_3, ... , h_n]$. It is easy to prove that there is a (n - 1)-dimensional vector $g_1,g_2,g_3, ...,$ to enable $\delta_e = \varepsilon H_2 g_1 + \varepsilon^2 H_2 g_2 + \varepsilon^3 H_2 g_3 + \cdots$, where a linear part may be represented as $\varepsilon H_2 g_1 = H\Delta H^T \Delta_B e$. $\Delta$ may meet the following formula 11:

$$\Delta = \text{diag}\{0, (\lambda_1 - \lambda_2)^{-1}, ..., (\lambda_1 - \lambda_n)^{-1}\} \qquad\qquad \text{Formula 11}$$

If a quadratic term and a higher order item in the error series are discarded, an error of the eigenvalue $\lambda_1$ may be $\lambda_1(\epsilon) - \lambda_1 \approx h_1^T\Delta_{A^TA} h_1$, and an error of the eigenvector e may be $\delta_e \approx H\Delta H^T\Delta_{ATA}e.$

When the matrix **A** is a non-degenerate matrix, in other words, when a rank of the matrix **A** is 8, $\lambda_1 = 0$. When a rank of the matrix **A** is less than 8, a solution of the matrix **E** is noise-sensitive. The noise mainly comes from a feature point detection error, a feature point matching error, a quantization error, a camera intrinsic parameter calibration error, and the like. Specifically, when the rank of the matrix $A$ is less than 8, $\lambda_1 \approx \lambda_2$. It can be learned from the formula 11 that a second term of $\Delta$ becomes infinite, which makes an estimation error of the matrix $E$ also becomes infinite.

Impact of the noise is embodied below when the camera compact module works in practice.

It can be learned from the formula 9 and the calculation process of $R$ and $t$ that $t \cdot (x_2 \times Rx_1) = 0$. That is, $t$ and $x_2 \times Rx_1$ are perpendicular to each other.

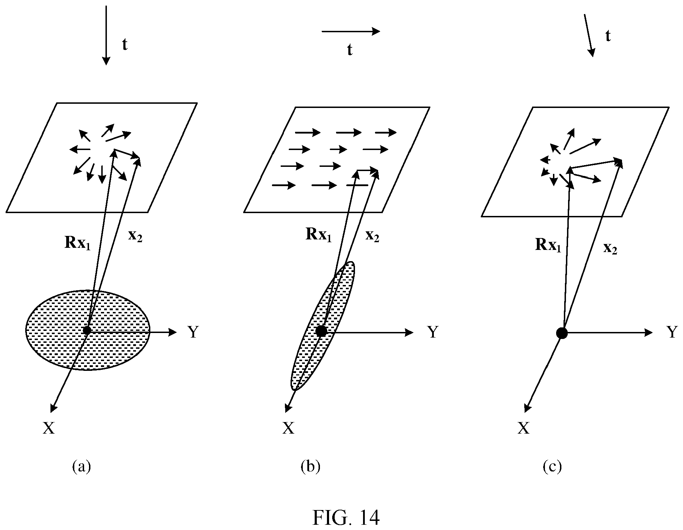

As shown in (a) in FIG. 14, when the translation vector $t$ is perpendicular to the plane $XY$ of the image sensor, $x_2 \times Rx_1$ covers a large area (refer to a shadow area). As shown in (b) in FIG. 14, when the translation vector $t$ is parallel to the plane $XY$ of the image sensor, $x_2 \times Rx_1$ covers a small area (refer to a shadow area). When the matrix $A$ is affected by noise, a shadow area deviates from an original position of the shadow area. Consequently, an error is introduced in estimation of the translation vector $t$. Apparently, in this case, a scenario shown in (a) in FIG. 14 has higher robustness than a scenario shown in (b) in FIG. 14.

Based on the foregoing analysis, it can be learned that, to ensure accuracy and robustness of camera motion estimation, a translation direction (a motion direction) of a camera should be perpendicular to the plane of the image sensor.

Based on the foregoing analysis, apparently, because the camera compact module installation method provided in embodiments of this application is used, when the camera compact module is installed on the mobile platform, the camera compact module can be parallel to the ground on which the mobile platform is located. Specifically, the optical axis of the lens group in the camera compact module and the normal line of the plane of the image sensor may be both parallel to the ground on which the mobile platform is located. For example, as shown in FIG. 10 and FIG. 11, the motion direction of the camera is perpendicular to the plane of the image sensor. This can improve accuracy and robustness of camera motion estimation. In other words, according to a method in the conventional technology, when a camera compact module is installed on a mobile platform, because the camera compact module is installed in a tilt manner, for example, as shown in FIG. 4 and FIG. 5, a motion direction of a camera cannot be perpendicular to a plane of an image sensor, affecting accuracy and robustness of camera motion estimation. Compared with the method, the camera compact module installation method provided in this embodiment of this application is used to obviously improve accuracy and robustness of camera motion estimation.

Persons skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product implemented on one or more computer-usable storage media (including but not limited to a disk memory, a CD-ROM, an optical memory, and the like) that include computer-usable program code.

Although some example embodiments of this application have been described, persons skilled in the art can make changes and modifications to these embodiments once they learn the basic inventive concept. Therefore, the following claims are intended to be construed as to cover the example embodiments and all changes and modifications falling within the scope of this application.

It is clear that persons skilled in the art can make various modifications and variations to this application without departing from the protection scope of this application. In this way, this application is intended to cover these modifications and variations of this application provided that they fall within the scope of protection defined by the following claims and their equivalent technologies.

**Claims**

1.  A camera compact module installation method, comprising:

    installing a camera compact module on a mobile platform, wherein the camera compact module is parallel to a ground on which the mobile platform is located, wherein
    the camera compact module comprises a lens group and an image sensor, and the lens group comprises at least one lens;
    a projection of a center of the lens group on a plane of the image sensor is a first position; and
    a distance between the first position and a center of the image sensor is greater than a first threshold, and the first threshold is greater than 0.

2.  The installation method according to claim 1, wherein an optical axis of the lens group and a normal line of the plane of the image sensor are both parallel to the ground on which the mobile platform is located.

3.  The installation method according to claim 1 or 2, wherein a connection line between the first position and the center of the image sensor is perpendicular to a horizontal axis direction in a first coordinate system, and the first coordinate system is a rectangular coordinate system established by using the center of the image sensor as an origin, a horizontal rightward direction as a positive direction of a horizontal axis, and a vertical downward direction as a positive direction of a vertical axis.

4. The installation method according to any one of claims 1 to 3, wherein the distance between the first position and the center of the image sensor is related to a first angle, and the first angle is an angle between an angle bisector of a vertical field of view VFOV of the camera compact module and the optical axis of the lens group.

5. The installation method according to claim 4, wherein the first angle is greater than 0 degrees and is less than or equal to half of a supplementary angle of the VFOV of the camera compact module.

6. The installation method according to claim 4 or 5, wherein an absolute value of a vertical coordinate $y_0$ of an optical center or a focus of expansion FOE corresponding to the camera compact module in the first coordinate system meets the following formula:

$$|y_0| = |f_y h(\theta)|,$$

wherein
$f_y$ is a focal length of a center of the camera compact module, $\theta$ is the first angle, $h(\theta) = \tan(\theta)$ or $h(\theta)$ is an N-order function with one variable of $\theta$, N is an integer greater than 0, and the first coordinate system is the rectangular coordinate system established by using the center of the image sensor as the origin, the horizontal rightward direction as the positive direction of the horizontal axis, and the vertical downward direction as the positive direction of the vertical axis.

7. The installation method according to any one of claims 1 to 5, wherein a vertical coordinate $y_0$ of an optical center or a focus of expansion FOE corresponding to the camera compact module in the first coordinate system meets the following formula:

$$y_0 = -f_y / \tan(\varphi/2),$$

wherein
$f_y$ is a focal length of a center of the camera compact module, $\varphi$ is the VFOV of the camera compact module, and the first coordinate system is the rectangular coordinate system established by using the center of the image sensor as the origin, the horizontal rightward direction as the positive direction of the horizontal axis, and the vertical downward direction as the positive direction of the vertical axis.

8. The installation method according to any one of claims 1 to 5, wherein a vertical coordinate $y_0$ of an optical center or a focus of expansion FOE corresponding to the camera compact module in the first coordinate system meets the following formula:

$$y_0 = -f_y \theta_d,$$

wherein
$f_y$ is a focal length of a center of the camera compact module, $\theta_d$ is related to $\Theta 1$, $\Theta 1 = (\pi - \varphi)/2$, $\varphi$ is the VFOV of the camera compact module, and the first coordinate system is the rectangular coordinate system established by using the center of the image sensor as the origin, the horizontal rightward direction as the positive direction of the horizontal axis, and the vertical downward direction as the positive direction of the vertical axis.

9. The installation method according to any one of claims 1 to 5, wherein a vertical coordinate $y_0$ of an optical center or a focus of expansion FOE corresponding to the camera compact module in the first coordinate system meets the following formula:

$$y_0 = f_y \tan(\varphi/2 - \theta_0),$$

wherein

$f_y$ is a focal length of a center of the camera compact module, $\theta_0$ is a preset degree, $\varphi$ is the VFOV of the camera compact module, and the first coordinate system is the rectangular coordinate system established by using the center of the image sensor as the origin, the horizontal rightward direction as the positive direction of the horizontal axis, and the vertical downward direction as the positive direction of the vertical axis.

10. The installation method according to any one of claims 1 to 5, wherein a vertical coordinate $y_0$ of an optical center or a focus of expansion FOE corresponding to the camera compact module in the first coordinate system meets the following formula:

$$y_0 = f_y \theta_s,$$

wherein

$f_y$ is a focal length of a center of the camera compact module, $\theta_s$ is related to $\Theta2$, $\Theta2 = \varphi/2 - \theta_0$, $\varphi$ is the VFOV of the camera compact module, $\theta_0$ is a preset degree, and the first coordinate system is the rectangular coordinate system established by using the center of the image sensor as the origin, the horizontal rightward direction as the positive direction of the horizontal axis, and the vertical downward direction as the positive direction of the vertical axis.

11. A mobile platform, comprising a camera compact module, wherein the camera compact module comprises a lens group and an image sensor, and the lens group comprises at least one lens;

the camera compact module is parallel to a ground on which the mobile platform is located;
a projection of a center of the lens group on a plane of the image sensor is a first position; and
a distance between the first position and a center of the image sensor is greater than a first threshold, and the first threshold is greater than 0.

12. The mobile platform according to claim 11, wherein an optical axis of the lens group and a normal line of the plane of the image sensor are both parallel to the ground on which the mobile platform is located.

13. The mobile platform according to claim 11 or 12, wherein a connection line between the center of the lens group and the center of the image sensor is perpendicular to a horizontal axis direction in a first coordinate system, and the first coordinate system is a rectangular coordinate system established by using the center of the image sensor as an origin, a horizontal rightward direction as a positive direction of a horizontal axis, and a vertical downward direction as a positive direction of a vertical axis.

14. The mobile platform according to any one of claims 11 to 13, wherein the distance between the first position and the center of the image sensor is related to a first angle, and the first angle is an angle between an angle bisector of a vertical field of view VFOV of the camera compact module and the optical axis of the lens group.

15. The mobile platform according to claim 14, wherein the first angle is greater than 0 degrees and is less than or equal to half of a supplementary angle of the VFOV of the camera compact module.

16. The mobile platform according to claim 14 or 15, wherein an absolute value of a vertical coordinate $y_0$ of an optical center or a focus of expansion FOE corresponding to the camera compact module in the first coordinate system meets the following formula:

$$|y_0| = \left| f_y h(\theta) \right|,$$

wherein

$f_y$ is a focal length of a center of the camera compact module, $\theta$ is the first angle, $h(\theta) = \tan(\theta)$ or $h(\theta)$ is an N-order function with one variable of $\theta$, N is an integer greater than 0, and the first coordinate system is the rectangular coordinate system established by using the center of the image sensor as the origin, the horizontal rightward direction as the positive direction of the horizontal axis, and the vertical downward direction as the positive direction of the vertical axis.

17. The mobile platform according to any one of claims 11 to 15, wherein a vertical coordinate $y_0$ of an optical center or a focus of expansion FOE corresponding to the camera compact module in the first coordinate system meets the following formula:

$$y_0 = -f_y / \tan(\varphi/2),$$

wherein

$f_y$ is a focal length of a center of the camera compact module, $\varphi$ is the VFOV of the camera compact module, and the first coordinate system is the rectangular coordinate system established by using the center of the image sensor as the origin, the horizontal rightward direction as the positive direction of the horizontal axis, and the vertical downward direction as the positive direction of the vertical axis.

18. The mobile platform according to any one of claims 11 to 15, wherein a vertical coordinate $y_0$ of an optical center or a focus of expansion FOE corresponding to the camera compact module in the first coordinate system meets the following formula:

$$y_0 = -f_y \theta_d,$$

wherein

$f_y$ is a focal length of a center of the camera compact module, $\theta_d$ is related to $\Theta1$, $\Theta1 = (\pi - \varphi)/2$, $\varphi$ is the VFOV of the camera compact module, and the first coordinate system is the rectangular coordinate system established by using the center of the image sensor as the origin, the horizontal rightward direction as the positive direction of the horizontal axis, and the vertical downward direction as the positive direction of the vertical axis.

19. The mobile platform according to any one of claims 11 to 15, wherein a vertical coordinate $y_0$ of an optical center or a focus of expansion FOE corresponding to the camera compact module in the first coordinate system meets the following formula:

$$y_0 = f_y \tan(\varphi/2 - \theta_0),$$

wherein

$f_y$ is a focal length of a center of the camera compact module, $\theta_0$ is a preset degree, $\varphi$ is the VFOV of the camera compact module, and the first coordinate system is the rectangular coordinate system established by using the center of the image sensor as the origin, the horizontal rightward direction as the positive direction of the horizontal axis, and the vertical downward direction as the positive direction of the vertical axis.

20. The mobile platform according to any one of claims 11 to 15, wherein a vertical coordinate $y_0$ of an optical center or a focus of expansion FOE corresponding to the camera compact module in the first coordinate system meets the following formula:

$$y_0 = f_y \theta_s,$$

wherein

$f_y$ is a focal length of a center of the camera compact module, $\theta_s$ is related to $\Theta2$, $\Theta2 = \varphi/2 - \theta_0$, $\varphi$ is the VFOV of the camera compact module, $\theta_0$ is a preset degree, and the first coordinate system is the rectangular coordinate system established by using the center of the image sensor as the origin, the horizontal rightward direction as the positive direction of the horizontal axis, and the vertical downward direction as the positive direction of the vertical axis.

FIG. 1

FIG. 2

FIG. 3

FIG. 4

FIG. 5

FIG. 6

Image sensor

Greater than a
first threshold

First position

Center of the
image sensor

VFOV

Center of the
lens group

Lens group

(a)

Image sensor

Greater than a
first threshold

Center of the
image sensor

First position

VFOV

Center of the
lens group

Lens group

(b)

FIG. 7

Lens group

HFOV

VFOV

Center of the
lens group

Image sensor

Center of the
image sensor

Area in which there
is no imaging

FIG. 8

Lens group

Center of the
image sensor

VFOV

HFOV

Center of the
lens group

Image sensor

Area in which there
is no imaging

FIG. 9

120°

Optical axis of a camera
compact module

Ground on which a
vehicle is located

FIG. 10

40°

Optical axis of a camera
compact module

Ground on which a
vehicle is located

FIG. 11

FIG. 12

(a)

(b)

(c)

(d)

FIG. 13

FIG. 14

**INTERNATIONAL SEARCH REPORT**

| International application No. |
| --- |
| **PCT/CN2021/082852** |

| A. | CLASSIFICATION OF SUBJECT MATTER |
| --- | --- |
| | H04N 5/247(2006.01)i |

According to International Patent Classification (IPC) or to both national classification and IPC

| B. | FIELDS SEARCHED |
| --- | --- |

Minimum documentation searched (classification system followed by classification symbols)

    H04N

Documentation searched other than minimum documentation to the extent that such documents are included in the fields searched

Electronic data base consulted during the international search (name of data base and, where practicable, search terms used)

    CNABS, CNTXT, CNKI, VEN, USTXT, EPTXT, WOTXT: 摄像头, 镜头, 传感器, 感光, 车载, 中心, 光轴, 偏移, 偏离, 偏置, 重合, 重叠, 位置, 坐标, 视场, 角度, 垂直, 竖直, camera, lens, sensor, vehicle, center, central, centre, deviate, offset, overlap, coincide, optical axis, position, coordinate, field, angle, view, range, vertical

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| E | CN 113491106 A (HUAWEI TECHNOLOGIES CO., LTD.) 08 October 2021 (2021-10-08) claims 1-20 | 1-20 |
| X | WO 2020178161 A1 (JAGUAR LAND ROVER LIMITED) 10 September 2020 (2020-09-10) description, page 5, line 12 to page 7, line 20, and claims 1-6, and figures 1-4 | 1-5, 11-15 |
| X | CN 209299385 U (SHENZHEN AIWEI INTELLIGENT CO., LTD.) 23 August 2019 (2019-08-23) description, paragraphs 20-28 and 33, and figures 1-5 | 1-5, 11-15 |
| X | US 2016044284 A1 (MAGNA ELECTRONICS INC.) 11 February 2016 (2016-02-11) description, paragraph 37, and figure 10 | 1-5, 11-15 |
| X | US 2014226008 A1 (MEKRA LANG GMBH & CO., KG) 14 August 2014 (2014-08-14) description, paragraphs 46-51, and figures 2-4 | 1-5, 11-15 |
| X | US 2017302855 A1 (FUJITSU LTD. et al.) 19 October 2017 (2017-10-19) description, paragraphs 89-105, and figures 9 and 15 | 1-5, 11-15 |
| X | US 2016137126 A1 (MAGNA ELECTRONICS INC.) 19 May 2016 (2016-05-19) description, paragraphs 111, 165 and 190, and figures 8-15B | 1-5, 11-15 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **01 December 2021** | **13 December 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| | International application No. |
|---|---|
| | **PCT/CN2021/082852** |

**C. DOCUMENTS CONSIDERED TO BE RELEVANT**

| Category* | Citation of document, with indication, where appropriate, of the relevant passages | Relevant to claim No. |
|---|---|---|
| A | CN 111866349 A (SHENZHEN DANGZHI TECHNOLOGY CO., LTD.) 30 October 2020 (2020-10-30)<br>        entire document | 1-20 |
| A | CN 105991904 A (FUZHOU ROCKCHIP ELECTRONICS CO., LTD.) 05 October 2016 (2016-10-05)<br>        entire document | 1-20 |
| A | US 2016021309 A1 (HONEYWELL INTERNATIONAL INC.) 21 January 2016 (2016-01-21)<br>        entire document | 1-20 |
| A | US 2014152771 A1 (OG TECHNOLOGIES, INC.) 05 June 2014 (2014-06-05)<br>        entire document | 1-20 |

**INTERNATIONAL SEARCH REPORT**
Information on patent family members

International application No.

**PCT/CN2021/082852**

| Patent document cited in search report | | | Publication date (day/month/year) | Patent family member(s) | | | Publication date (day/month/year) |
|---|---|---|---|---|---|---|---|
| CN | 113491106 | A | 08 October 2021 | None | | | |
| WO | 2020178161 | A1 | 10 September 2020 | GB | 201902846 | D0 | 17 April 2019 |
| | | | | GB | 2582263 | A | 23 September 2020 |
| CN | 209299385 | U | 23 August 2019 | None | | | |
| US | 2016044284 | A1 | 11 February 2016 | US | 2020148114 | A1 | 14 May 2020 |
| | | | | US | 10899277 | B2 | 26 January 2021 |
| | | | | US | 10525883 | B2 | 07 January 2020 |
| | | | | US | 2021146838 | A1 | 20 May 2021 |
| US | 2014226008 | A1 | 14 August 2014 | EP | 2765031 | A1 | 13 August 2014 |
| | | | | EP | 2765031 | B1 | 28 June 2017 |
| | | | | KR | 20140101308 | A | 19 August 2014 |
| | | | | KR | 101533911 | B1 | 03 July 2015 |
| | | | | ES | 2637173 | T3 | 11 October 2017 |
| | | | | CN | 103978934 | A | 13 August 2014 |
| | | | | CN | 103978934 | B | 25 May 2016 |
| | | | | JP | 2014151911 | A | 25 August 2014 |
| | | | | JP | 5816311 | B2 | 18 November 2015 |
| | | | | BR | 102014002974 | A2 | 02 December 2014 |
| | | | | BR | 102014002974 | B1 | 22 June 2021 |
| | | | | DE | 102013002111 | A1 | 14 August 2014 |
| | | | | DE | 102013002111 | B4 | 18 November 2021 |
| | | | | US | 9667922 | B2 | 30 May 2017 |
| | | | | US | RE48017 | E | 26 May 2020 |
| US | 2017302855 | A1 | 19 October 2017 | CN | 107303849 | A | 31 October 2017 |
| | | | | JP | 2017193218 | A | 26 October 2017 |
| | | | | JP | 6343629 | B2 | 13 June 2018 |
| | | | | US | 10412308 | B2 | 10 September 2019 |
| US | 2016137126 | A1 | 19 May 2016 | EP | 3010761 | A1 | 27 April 2016 |
| | | | | EP | 3010761 | A4 | 25 January 2017 |
| | | | | EP | 3010761 | B1 | 24 July 2019 |
| | | | | US | 2021188167 | A1 | 24 June 2021 |
| | | | | US | 10946798 | B2 | 16 March 2021 |
| | | | | WO | 2014204794 | A1 | 24 December 2014 |
| CN | 111866349 | A | 30 October 2020 | None | | | |
| CN | 105991904 | A | 05 October 2016 | None | | | |
| US | 2016021309 | A1 | 21 January 2016 | EP | 2978206 | A1 | 27 January 2016 |
| | | | | CA | 2896117 | A1 | 21 January 2016 |
| | | | | CN | 105282500 | A | 27 January 2016 |
| US | 2014152771 | A1 | 05 June 2014 | EP | 2923195 | A2 | 30 September 2015 |
| | | | | EP | 2923195 | A4 | 20 July 2016 |
| | | | | JP | 2015536468 | A | 21 December 2015 |
| | | | | CN | 104969057 | A | 07 October 2015 |
| | | | | WO | 2014085798 | A2 | 05 June 2014 |
| | | | | WO | 2014085798 | A3 | 24 July 2014 |

Form PCT/ISA/210 (patent family annex) (January 2015)